(19) Europäisches Patentamt

European Patent Office

Office européen des brevets

(11) Veröffentlichungsnummer: **0 590 719 A2**

# (12) EUROPÄISCHE PATENTANMELDUNG

(21) Anmeldenummer: **93202746.9**

(22) Anmeldetag: **23.09.93**

(51) Int. Cl.⁵: **H04N 3/15**

(30) Priorität: **26.09.92 DE 4232401**

(43) Veröffentlichungstag der Anmeldung:
**06.04.94 Patentblatt 94/14**

(84) Benannte Vertragsstaaten:
**DE FR GB NL**

(71) Anmelder: **Philips Patentverwaltung GmbH**
**Wendenstrasse 35c**
**D-20097 Hamburg(DE)**

㊱ **DE**

(71) Anmelder: **PHILIPS ELECTRONICS N.V.**
**Groenewoudseweg 1**
**NL-5621 BA Eindhoven(NL)**

㊱ **FR GB NL**

(72) Erfinder: **Schiebel, Ulrich, Dr.**
**Philips Patentverwaltung Gmbh,**
**Wendenstrasse 35c**
**D-20097 Hamburg(DE)**
Erfinder: **Wieczorek, Herfried, Dr.**
**Philips Patentverwaltung Gmbh,**
**Wendenstrasse 35c**
**D-20097 Hamburg(DE)**

(74) Vertreter: **Hartmann, Heinrich, Dipl.-Ing. et al**
**Philips Patentverwaltung GmbH,**
**Wendenstrasse 35c**
**D-20097 Hamburg (DE)**

(54) **Anordnung zum Auslesen von Bildern.**

㉗ Die Erfindung betrifft eine Anordnung mit in einer Matrix von in Zeilen und Spalten angeordneten, optisch aktiven Matrixelementen, von denen jedes einen für Licht- bzw. Röntgenstrahlung empfindlichen Sensor zur Erzeugung belichtungsabhängiger Signale sowie einen Schalter enthält, wobei die Schalter untereinander so gekoppelt sind, daß die Schalter der Sensoren einer Zeile über jeweils eine Schaltleitung mittels Schaltimpulsen schaltbar sind und die Sensoren jeweils einer Spalte über die Schalter mit einer Ausleseleitung gekoppelt sind, wobei Mittel zum Ableiten von digitalen Bilddaten aus den Signalen der optisch aktiven Matrixelemente auf den Ausleseleitungen vorgesehen sind. Dabei lassen sich Störungen dadurch beseitigen, daß Mittel zum Kombinieren der Signale auf den Ausleseleitungen mit Kompensationsimpulsen vorgesehen sind, deren zeitlicher Verlauf so gestaltet ist, daß sie zumindest näherungsweise die Störimpulse kompensieren, die durch die Schaltimpulse kapazitiv in die Ausleseleitungen eingekoppelt werden.

EP 0 590 719 A2

Fig.1

Die Erfindung betrifft eine Anordnung mit in einer Matrix von in Zeilen und Spalten angeordneten, optisch aktiven Matrixelementen, von denen jedes einen für Licht bzw. Röntgenstrahlung empfindlichen Sensor zur Erzeugung belichtungsabhängiger Signale sowie einen Schalter enthält, wobei die Schalter untereinander so gekoppelt sind, daß die Schalter der Sensoren einer Zeile über jeweils eine Schaltleitung mittels Schaltimpulsen schaltbar sind und die Sensoren jeweils einer Spalte über die Schalter mit einer Ausleseleitung gekoppelt sind, wobei Mittel zum Ableiten von digitalen Bilddaten aus den Signalen der optisch aktiven Matrixelemente auf den Ausleseleitungen vorgesehen sind.

Eine solche Anordnung ist aus der DE-OS 40 02 431 (PHD 90-015) bekannt. Man kann sie für Röntgenaufnahmen, aber auch für die Aufnahme von Bildern mit sichtbarem Licht einsetzen. Die Schalter werden dabei in der Regel durch Dünnfilm-Feldeffekttransistoren gebildet, deren Gate mit jeweils einer der Schaltleitungen und deren Drain mit jeweils einer der Ausleseleitungen verbunden ist. Durch die Drain-Gate-Kapazität dieser Transistorschalter werden die Schaltimpulse von der Schaltleitung auf die Ausleseleitung eingekoppelt, wodurch sich im Bild störende Artefakte ergeben.

Aufgabe der vorliegenden Erfindung ist es, diese bzw. andere Artefakte in dem von der Anordnung erzeugten (Röntgen-)Bild zumindest weitgehend zu beseitigen.

Diese Aufgabe wird erfindungsgemäß dadurch gelöst, daß Mittel zum Kombinieren der Signale auf den Ausleseleitungen mit Kompensationsimpulsen vorgesehen sind, deren zeitlicher Verlauf so gestaltet ist, daß sie zumindest näherungsweise die Störimpulse kompensieren, die durch die Schaltimpulse kapazitiv in die Ausleseleitungen eingekoppelt werden.

Mit dieser erfindungsgemäßen Lösung können die Artefakte verringert bzw. beseitigt werden, die durch das Einkoppeln von Schaltimpulsen von der Schaltleitung (z.B. über die Drain-Gate-Kapazität eines Transistorschalters) auf die Ausleseleitungen hervorgerufen werden. Im Höchstfall müssen soviele Kompensationsimpulse erzeugt werden, wie Ausleseleitungen vorhanden sind. Da die Störsignale aber auf allen Ausleseleitungen einen weitgehend ähnlichen Verlauf haben, kann man die Störimpulse auch dadurch kompensieren, daß man einen einzigen Kompensationsimpuls sämtlichen Ausleseleitungen zuführt. Dadurch ergibt sich ein geringer Aufwand für die Störunterdrückung.

Es ist an sich bekannt, daß bei Bildaufnehmern mit Fotosensoren, die über Schalter auslesbar sind, die Schaltimpulse durch Einkopplung über die Schalterkapazitäten Störungen hervorrufen können. So ist aus der US-PS 41 45 721 ein Bildaufnehmer mit einem Sensorarray bekannt, bei dem alle Sensorelemente über je einen Schalter mit einer gemeinsamen Ausleseleitung verbunden sind. Zur Kompensation der beim Schalten auf dieser Ausleseleitung erzeugten Störimpulse ist ein zweites Array von Schaltern vorgesehen, die mit einer Kompensationsleitung derart verbunden sind, daß sich auf dieser Leitung nur die Störimpulse (aber nicht die Bildsignale) ergeben. Mittels eines Differenzverstärkers werden die Störimpulse auf den beiden Leitungen eliminiert. Bei dieser Lösung müssen also doppelt soviele Schalter vorhanden sein wie Fotosensoren. Dadurch ergibt sich bei einer Anordnung der eingangs genannten Art ein beträchtlicher Schaltungsaufwand.

Weiterhin ist aus der US-PS 48 21 104 ein Bildaufnehmer mit matrixförmig angeordneten Sensoren bekannt, die zeilenweise ausgelesen werden, wobei die Bildsignale der Sensoren in einer Zeile über je eine Ausleseleitung und je einen Schalter einer gemeinsamen Ausgangsleitung zugeführt werden. Die Schalter werden nacheinander eingeschaltet, so daß die analogen Ausgangssignale nacheinander auf der gemeinsamen Ausgangsleitung erscheinen. Die dabei gleichzeitig als Folge der Schaltimpulse auf der Ausgangsleitung auftretenden Störimpulse werden mit Hilfe einer sogenannten "Dummy-"Leitung kompensiert, an die ein weiterer Satz von Transistorschaltern angeschlossen ist, die genauso geschaltet werden wie die an die Ausgangsleitung angeschlossenen Transistorschalter. Infolgedessen treten auf der Dummy-Leitung ebenfalls Störimpulse auf, die mittels eines Flip-Flop-Verstärkers die Störsignale auf der Ausgangsleitung kompensieren können. Die US-PS 48 21 104 enthält keine Angaben darüber, ob beim Schalten der einzelnen Sensorzeilen auf den Ausleseleitungen Störsignale auftreten, und erst recht keine Angaben darüber, wie gegebenenfalls solche Störsignale beseitigt werden können.

Eine bevorzugte Weiterbildung der Erfindung sieht vor, daß

- die Matrix mindestens eine Zeile mit Hilfsmatrixelementen enthält, die einen entsprechenden Aufbau haben wie die Matrixelemente, aber optisch inaktiv sind, daß
- die Schalter der Hilfsmatrixelemente mit Sperrimpulsen beaufschlagt werden, die die entgegengesetzte Polarität, im übrigen aber einen ähnlichen zeitlichen Verlauf haben und zur gleichen Zeit auftreten wie die Schaltimpulse für die Matrixelemente, und daß
- die Hilfsmatrixelemente in der gleichen Weise mit der gleichen Ausleseleitung verbunden sind wie die in der gleichen Spalte befindlichen Matrixelemente.

Da die Schalter der Hilfsmatrixelemente mit Schaltimpulsen beaufschlagt werden, die die entgegengesetzte Polarität aber einen ähnlichen zeitlichen Verlauf haben wie die Schaltimpulse für die Matrixelemente werden über diese Schalter Kompensationsimpulse erzeugt, die einen ähnlichen zeitlichen Verlauf aber eine entgegengesetzte Polarität haben wie die von den Schaltern der jeweils aktivierten Zeile von Matrixelementen erzeugten Störimpulse, so daß sich auf den Ausleseleitungen die Störimpulse und die Kompensationsimpulse eliminieren und nur die belichtungsabhängigen Signale übrigbleiben.

Außer den Artefakten, die durch die kapazitive Einkopplung der Schaltimpulse auf die Ausleseleitung entstehen, gibt es noch weitere Artefakte, die die Bildqualität beeinträchtigen. Dabei handelt es sich um zeilenkorrelierte Störungen oder um spaltenkorrelierte Störungen. Diese Störungen haben gemeinsam, daß sie innerhalb aller Zeilen (bzw. innerhalb einer Spalte) annähernd gleich groß sind und sich von Matrixelement zu Matrixelement nur wenig ändern. Die Ursache für die zeilenkorrelierten Störungen können Störungen sein, die innerhalb der Matrix erzeugt werden und sich auf der Schaltleitung aller Zeilen ausbreiten. Diese Störsignale auf den Schaltleitungen werden auf die Ausleseleitungen kapazitiv eingekoppelt und zwar auch dann, wenn die Schalter der betreffenden Matrixzeile momentan nicht eingeschaltet sind. - Die Ursache von mit den Spalten korrelierten Störungen können Leckströme sein, die den zugehörigen Ausleseleitungen zufließen.

Diese Störungen werden erfindungsgemäß dadurch eliminiert, daß die Matrix mindestens eine Zeile (und/oder Spalte) von weiteren Matrixelementen enthält, die den gleichen Aufbau haben wie die optisch aktiven Matrixelemente, aber optisch inaktiv sind und die mit einer weiteren Schaltleitung (Ausleseleitung) sowie mit den Ausleseleitungen (Schaltleitungen) der optisch aktiven Matrixelemente verbunden sind, die jeweils in der gleichen Spalte (Zeile) liegen und daß Korrekturmittel vorgesehen sind, die von den Bilddaten die Korrekturdaten subtrahieren, die aus den Signalen der optisch inaktiven Matrixelemente abgeleitet werden.

Die Zeile(n) bzw. Spalte(n) mit weiteren Matrixelementen dient dabei zur Bestimmung der zeilen- bzw. spaltenkorrelierten Störungen. Bildet man daher aus den Signalen dieser weiteren Matrixelemente digitale Korrekturdaten, die von den Bilddaten der optisch aktiven Matrixelemente subtrahiert werden, dann entstehen korrigierte Bildsignale, die von den geschilderten zeilen- bzw. spaltenkorrelierten Störungen weitgehend frei sind.

Die Erfindung wird nachstehend anhand der Zeichnungen näher erläutert. Es zeigen:

Fig. 1 eine erfindungsgemäße Anordnung,

Fig. 2 den zeitlichen Verlauf der Signale auf einigen der Schaltleitungen nach Fig. 1,

Fig. 3 den zeitlichen Verlauf der Störsignale auf unterschiedlichen Signalleitungen,

Fig. 4 einen Teil der Schaltung zur Erzeugung der Schaltimpulse in schematischer Darstellung,

Fig. 5 eine Anordnung zur Erzeugung von Kompensationsimpulsen,

Fig. 6 ein schematisches Blockschaltbild einer Anordnung zur Weiterverarbeitung der von der Anordnung nach Fig. 1 gelieferten analogen Signale,

Fig. 7 die von den Matrixelementen einer Zeile erzeugten digitalen Bildsignale mit einer überlagerten zeilenkorrelierten Störung und

Fig. 8 die gleichen Signale nach einer Korrektur.

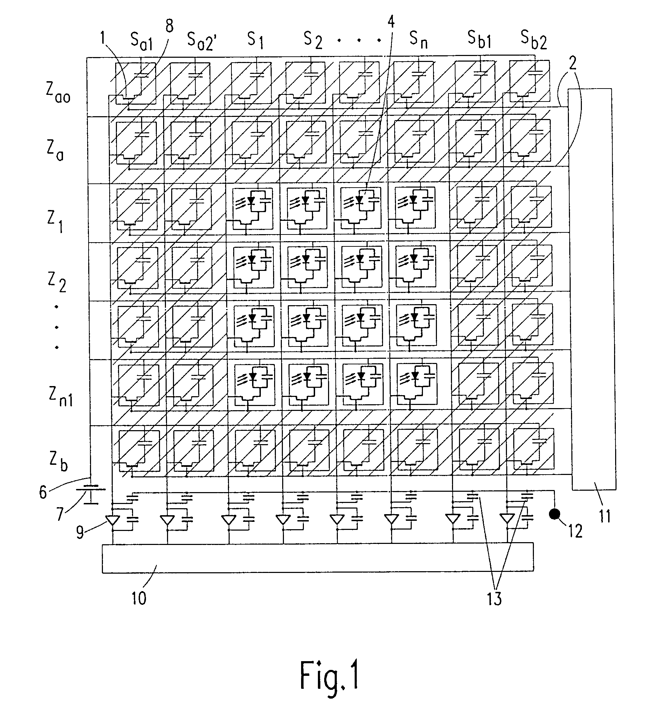

Fig. 1 zeigt eine Matrix, in deren Zeilen und Spalten Matrixelemente angeordnet sind. Die Zeilen sind von oben nach unten mit $z_{ao}$, $z_a$, $z_1$, $z_2$ ... $z_m$ und $z_b$ bezeichnet. Die Spalten der Matrix sind von links nach rechts $s_{a1}$ und $s_{a2}$, $s_1$, $s_2$ ... $s_n$, $s_{b1}$ und $s_{b2}$ bezeichnet. Somit kann jedes Matrixelement durch Angabe der Spalte und der Zeile definiert werden, in der es sich befindet.

Jedes Matrixelement enthält einen Schalter 1, der durch einen Dünnfilm-Feldeffekttransistor gebildet wird. Für jede Zeile gibt es eine Schaltleitung 2, an die die Gate-Elektroden aller Schalter dieser Zeile angeschlossen sind. Durch einen von einer Treiberschaltung 11 erzeugten Schaltimpuls auf der Schaltleitung 2 werden alle Schalter einer Zeile gleichzeitig leitend. - Für jede Spalte von Matrixelementen ist eine Ausleseleitung 3 vorhanden, an die die Drain-Elektroden aller Schalter in der betreffenden Spalte angeschlossen sind.

Die Source-Elektroden aller Matrixelemente, die zugleich in einer der Zeilen $z_1$ ... $z_m$ und einer der Spalten $s_1$ ... $s_n$ liegen, sind an je einen für Licht empfindlichen Sensor zur Erzeugung belichtungsabhängiger Signale angeschlossen. Der Sensor wird durch eine (in Sperrichtung betriebene) Fotodiode gebildet, die in der Zeichnung durch eine Diode und eine ihr parallel liegende Kapazität repräsentiert wird. Alle Fotodioden sind mit ihrem anderen Anschluß mit einer Versorgungsspannungsleitung 6 verbunden, an die eine Spannungsquelle 7 angeschlossen ist, die die Fotodioden in Sperrichtung vorspannt.

Die Matrixelemente mit den der Belichtung ausgesetzten Fotodioden werden im folgenden als optisch aktive Matrixelemente bezeichnet, weil sie - in den Kapazitäten ihrer Fotodioden - Ladungen speichern, die ein Maß für die Belichtung des betreffenden Matrixelementes bzw. Bildpunktes (Pixel) sind. Um ein Bild mit guter räumlicher Auflösung zu erhalten, müssen wesentlich mehr optisch aktive Matrixelemente vorhanden sein als in der Zeichnung dargestellt, z.B. 1000 x 1000 (n = m = 1000). Das auf die optisch aktiven Matrixelemente auftreffende Licht kann von einer Phosphorschicht, beispielsweise aus Caesiumjodid erzeugt werden, die Röntgenstrahlung in sichtbares Licht umsetzt und die diese Matrixelemente bedeckt. Derartige Matrixanordnungen mit optisch aktiven Matrixelementen sind an sich bekannt, beispielsweise aus der eingangs genannten DE-OS 40 02 431, auf die ausdrücklich Bezug genommen wird.

In den Zeilen $z_{a0}$, $z_a$ und $z_b$ sowie in den Spalten $s_{a1}$, $s_{a2}$, $s_{b1}$ und $s_{b2}$ sind optisch inaktive Matrixelemente vorhanden, die einen entsprechenden Aufbau haben wie die optisch aktiven Elemente, aber keine belichtungsabhängigen Signale liefern. Bei diesen optisch inaktiven Matrixelementen ist die Source-Elektrode des Dünnfilmtransistor-Schalters 1 über eine Kapazität 8 mit der Versorgungsspannungsleitung 6 verbunden, wobei die Kapazität den gleichen Wert hat wie die Kapazität der Fotodiode. Diese Kapazitäten können jeweils mittels einer Fotodiode realisiert werden, die jedoch gegen Lichteinfall abgeschirmt ist, so daß sie nur als Kapazität wirksam ist. In diesem Fall haben alle Matrixelemente einen identischen Aufbau mit dem Unterschied, daß die optisch inaktiven Matrixelemente nicht von Licht getroffen werden können. Die Matrixelemente können jedoch auch dadurch realisiert werden, daß zwischen den in Dünnschichttechnik realisierten Elektroden der Kapazität anstelle einer lichtempfindlichen Schicht, beispielsweise aus amorphen Silizium, eine für Licht unempfindliche Schicht aufgebracht wird, beispielsweise aus Siliziumdioxid.

Jede Ausleseleitung ist mit einem Ausleseverstärker 9 verbunden, dessen Ausgangsspannung - wenn man einmal von den Störsignalen absieht - von der Ladung abhängt, die sich als Folge der Belichtung in der Fotodiode desjenigen Matrixelements gesammelt hat, das an die betreffende Ausleseleitung angeschlossen ist und durch einen Schaltimpuls angesteuert wurde. Die Ausgänge der Ausleseverstärker 9 sind mit einer Schaltung 10 verbunden, die die Ausgangssignale 10 zunächst analog und danach digital weiterverarbeitet.

Die Ausleseverstärker verarbeiten die Signale auf den Ausleseleitungen vorzugsweise nach dem CDS-Verfahren (Correlated Double Sampling). Dabei wird das Signal auf der Ausleseleitung vor und nach dem Schaltimpuls abgetastet - vorzugsweise mehrfach, wobei der arithmetische Mittelwert der Abtastwerte jeweils vor bzw. nach dem Schaltimpuls gebildet wird. Die Differenz der Abtastwerte entspricht der Ladung in der Fotodiode, die jeweils über ihren zugehörigen Schalter mit der Ausleseleitung verbunden ist, falls keine Störsignale auftreten. Diese Differenz bildet das Ausgangssignal des Ausleseverstärkers. Durch das CDS-Verfahren können Signaloffsets auf den Ausleseleitungen eliminiert werden. Es leuchtet ein, daß der Schaltungsaufbau eines solchen Verstärkers komplexer ist als in Fig. 1 der Einfachheit halber dargestellt.

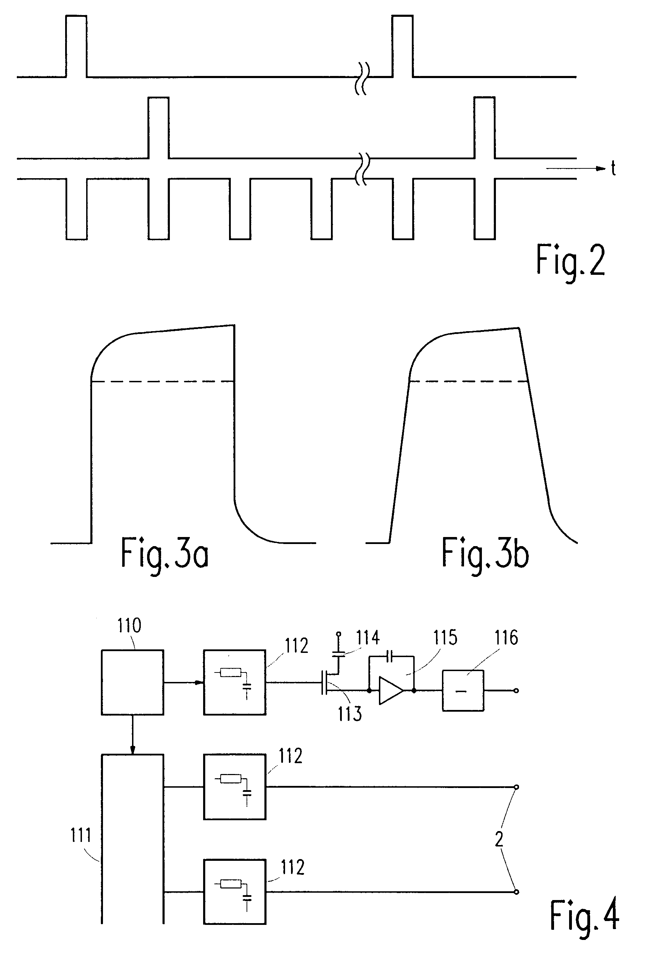

Fig. 2 zeigt in ihren beiden ersten Zeilen den zeitlichen Verlauf bzw. die zeitliche Lage der Schaltimpulse auf zwei benachbarten Schaltleitungen, z.B. den beiden Schaltleitungen für die Zeilen $z_1$ und $z_2$. Man erkennt, daß die Schalter der Matrixelemente zeilenweise nacheinander eingeschaltet werden. Wenn alle Zeilen einmal eingeschaltet waren, erfolgt ein weitere Zyklus, in dem die Schaltleitungen nacheinander jeweils einen weiteren Schaltimpuls erhalten.

Fig. 3a und 3b zeigen den zeitlichen Verlauf eines sich beim Schalten ergebenden Ausgangssignals und zwar einmal in einer Spalte in der Nähe der Treiberschaltung (z.B. in der Spalte $s_n$ - Fig. 3a) und einmal in einer weiter von der Treiberschaltung 11 entfernten Spalte, z.B. in der Spalte $s_2$. Die Unterschiede beruhen darauf, daß sich in der weiter von der Treiberschaltung 11 entfernten Spalte $s_2$ die größere Länge der Schaltleitung und ihr größerer kapazitiver Anteil bemerkbar machen, so daß sich die Flankensteilheit der zunächst rechteckigen Schaltimpulse verringert, bevor sie einen Schalter in einer weiter entfernten Spalte erreichen.

Das Ausgangssignal setzt sich aus einem von der Ladung in den Fotodioden abhängigen Nutzanteil und einem Störanteil zusammen. Die Amplitude des Nutzanteils ist in der Regel klein im Vergleich zur Amplitude des Störanteils, so daß die Signale in Fig. 3 und Fig. 3b praktisch dem Störanteil entsprechen. Zur einwandfreien Verarbeitung von Signalen mit einem derart hohen Störanteil müßten die Ausleseverstärker einen außerordentlich hohen Dynamikbereich aufweisen. Um mit einem geringeren Dynamikbereich der Ausleseverstärker auszukommen, müssen die Störanteile schon auf der Ausleseleitung - zumindest teilweise - eliminiert werden.

Der Störanteil hat zwei verschiedene Ursachen: Der Schaltimpuls auf einer der Schaltleitungen wird über die Gate-Drain-Kapazitäten der jeweils eingeschalteten Schalter auf die Ausleseleitung übertragen. Bei einer Amplitude der Störanteile von z.B. 20 V (- 5 V bei gesperrtem Schalter, + 15 V bei leitendem Schalter) ist dieser Störanteil, der in den Fig. 3a und 3b durch die gestrichelte Linie angedeutet ist, der dominierende Anteil.

Daneben gibt es noch einen Störanteil, der dadurch bedingt ist, daß die Dünnfilmtransistoren erst dann leitend werden, wenn im Transistorkanal eine negative Ladung gespeichert ist und daß sie erst dann wieder gesperrt werden, wenn diese negative Ladung abgebaut ist. Das Ansammeln und das Abbauen der negativen Ladung im Kanal der Dünnfilmfeldeffekttransistor-Schalter folgt dem Verlauf der Schaltimpulse nur mit einer gewissen zeitlichen Verzögerung, so daß sich insgesamt der in Fig. 3a bzw. 3b dargestellte Verlauf der Ausgangssignale auf den Ausleseleitungen ergibt.

Das verzögerte Abschalten der Transistoren kann sich insbesondere dann störend auswirken, wenn die Ausgangssignale entsprechend dem CDS-Verfahren verarbeitet werden. - Durch den langsamen Abfall des Signals, wie in Fig. 3a bzw. 3b gezeichnet, kann es zu einem zusätzlichen Offset bei einem entsprechend verarbeiteten Signal kommen, wenn sich leichte Änderungen der Abtastzeitpunkte (Jitter) ergeben.

Die in Fig. 3a und 3b dargestellten Störimpulse werden mit Hilfe von Kompensationsimpulsen (zumindest teilweise) eliminiert, die den Ausleseleitungen 3 der Matrix zugeführt werden und die - zumindest annähernd - den gleichen zeitlichen Verlauf haben wie die Störimpulse der Fig. 3a bzw. 3b, jedoch die entgegengesetzte Polarität.

Diese Kompensationsimpulse werden mit Hilfe der in der Zeile $z_{a0}$ enthaltenen optisch inaktiven Matrixelemente erzeugt. Jedesmal, wenn auf einer der Leitungen für die Zeilen $z_a$ bis $z_b$ ein Schaltimpuls erscheint, wird auf der Schaltleitung für die Zeile $z_{a0}$ ein Sperrimpuls erzeugt, der etwa den gleichen Verlauf hat wie der Schaltimpuls, aber die entgegengesetzte Polarität (vgl. 3. Zeile von Fig. 2); wenn bei einem Schaltimpuls das Potential auf der Schaltleitung 2, also von - 5 V auf + 15 V springt, dann springt das Potential auf der Zeile $z_{a0}$ von - 5 V auf - 25 V. Dadurch liefert diese Zeile auf den Ausleseleitungen Kompensationsimpulse, die etwa den gleichen zeitlichen Verlauf haben, wie die Störimpulse, aber die entgegengesetzte Polarität, so daß die Störimpulse durch die Schaltimpulse praktisch eliminiert werden und im wesentlichen nur der durch die Belichtung der optisch aktiven Matrixelemente erzeugte Nutzanteil im Ausgangssignal verbleibt.

Ein Vorteil dabei ist, daß die den verschiedenen Schaltern der Zeile $z_{a0}$ zugeführten Sperrimpulse sich in gleicher Weise in Abhängigkeit von ihrem Abstand von der Treiberschaltung 11 verformen, wie die Schaltimpulse auf den übrigen Schaltleitungen. Unter Umständen kann sich aber eine eingeschränkte Kompensation der Störsignale ergeben:

Wenn geringfügige zeitliche Verschiebungen zwischen den Schaltimpulsen und den Sperrimpulsen auftreten, ergeben sich an den Ausgängen der Ausleseverstärker 9 durch die Kombination der Störimpulse und der Kompensationsimpulse kurzzeitige Spannungsstöße (spikes), die umso ausgeprägter sind, je geringer der Abstand der betreffenden Schaltleitung von der Treiberschaltung 11 ist, d.h. je steilflankiger die Schalt- bzw. Sperrimpulse sind. - Da die Dünnfilmtransistorschalter der Zeile $z_{a0}$ durch die Sperrimpulse nicht leitend werden, fällt der durch den Ladungsaufbau bzw. durch den Ladungsabbau bedingte Störanteil, der sich bei den durch die Schaltimpulse leitend gemachten Schaltern ergibt.

Fig. 4 zeigt einen Teil einer Ausgestaltung der Treiberschaltung 11, mit der diese Einschränkungen überwunden werden. Die Treiberschaltung 11 umfaßt einen Taktimpulsgenerator 110, dessen Ausgang einer in Fig. 4 nur zum Teil dargestellten Schaltung 111 zugeführt werden, die für jede Schaltleitung 2 der Zeilen $z_a$ ... $z_b$ einen Ausgang hat, wobei bei jedem der vom Taktimpulserzeuger 110 gelieferten Taktimpulse auf einer der Ausgangsleitungen ein Schaltimpuls erscheint. Die Ausgänge sind über Schaltungen 112, die die Flankensteilheit der von der Schaltung 111 gelieferten Rechteckimpulse verringern und zu diesem Zweck beispielsweise eine RC-Kombination enthalten können, mit den Schaltleitungen 2 verbunden. Auf den Schaltleitungen 2 erscheinen daher nacheinander Schaltimpulse mit schräg bzw. exponentiell verlaufenden Vorder- und Rückflanken.

Die von dem Taktimpulserzeuger 110 erzeugten Taktimpulse werden außerdem über eine entsprechend aufgebaute Schaltung 112 dem Gate eines Extratransistors 113 zugeführt. Der Extratransistor 113 soll den gleichen Aufbau bzw. die gleiche Kennlinie haben wie die als Schalter in den Matrixelementen dienenden Dünnfilmtransistoren und der Kondensator 114, über den die Drain-Elektrode des Extratransistors 113 an eine Gleichspannung angeschlossen ist, soll die gleiche Kapazität haben wie die Fotodioden in den Matrixelementen. Die Source-Elektrode des Extratransistors 113 ist über einen Ladungsverstärker 115 mit einer Invertierschaltung 116 verbunden.

Die Leitfähigkeit des Extratransistors 113 ändert sich bei jedem Schaltimpuls in gleicher Weise wie die Leitfähigkeit der Schalter in den Matrixelementen. Infolgedessen ergibt sich am Ausgang des Ladungsverstärkers 115 ein Spannungsverlauf, der demjenigen nach Fig. 3a entspricht, d.h. also mit den durch den Ladungsauf- und -abbau im Transistorkanal bedingten Verzögerungen. Dieser Schaltimpuls wird durch die Invertierschaltung 116 invertiert und kann als Sperrimpuls für die Schaltleitung 2 der Matrixzeile $z_{a0}$ dienen. Bei geeigneter Auslegung der Schaltung sind dann die Sperrimpulse den Schaltimpulsen zwar nicht entgegengesetzt gleich, jedoch sind die dadurch auf den Ausleseleitungen erzeugten Kompensationsimpulse den Störimpulsen entgegengesetzt gleich, die von den optisch aktiven Matrixelementen auf die Ausleseleitungen gelangen. Auf diese Weise ist eine vollständige Beseitigung der Störimpulse auf den Ausleseleitungen möglich.

Alternativ zu der Erzeugung der Kompensationsimpulse durch eine gesonderte Zeile von Matrixelementen kann auch eine Störimpulsquelle verwendet werden, deren Signal der Eingangsklemme 12 zugeführt wird, die über je einen Kondensator 13 mit dem Eingang der Ausleseverstärker 9 verbunden ist. Allerdings ist der Kompensationsimpuls hierbei für alle Ausleseleitungen identisch, während die Störimpulse auf den Ausleseleitungen entsprechend ihrem Abstand von der Treiberschaltung unterschiedliche Flankensteilheiten haben. Die Zeile $z_{a0}$ wäre dann überflüssig. Als Kompensationsimpulsquelle kann die Schaltung 112-116 dienen.Der Ausgang der Invertierschaltung 116 muß dann mit der Eingangsklemme 12 verbunden sein.

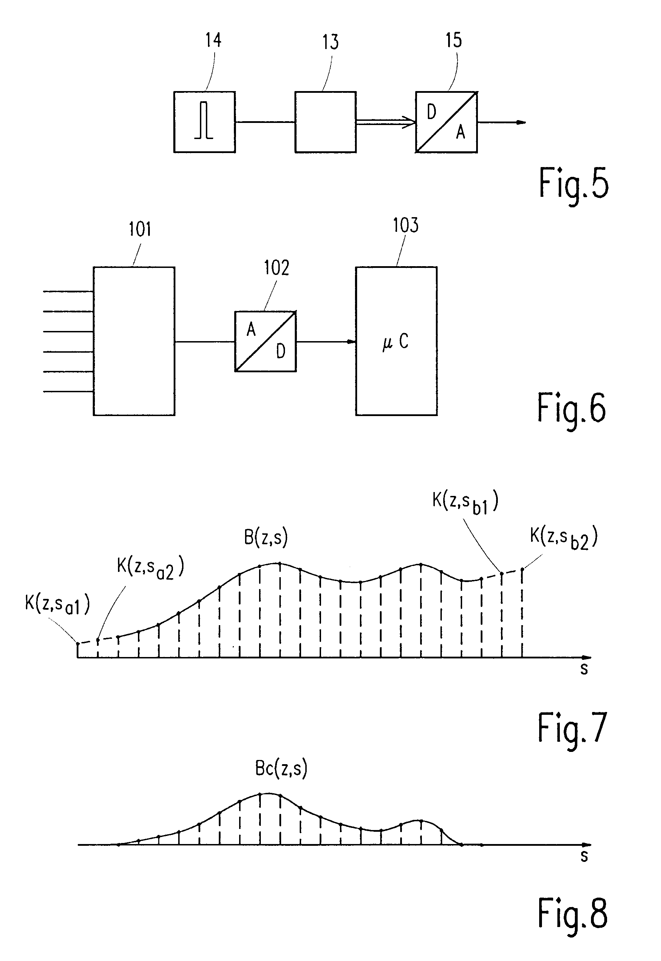

Eine andere Kompensationsimpulsquelle ist in Fig. 5 dargestellt. Sie umfaßt einen Speicher 13, in dem der zeitliche Verlauf eines Kompensationsimpulses als Folge digitaler Datenworte gespeichert ist. Dieser zeitliche Verlauf kann einmal durch die Erfassung eines Störimpulses auf einer Ausleseleitung bestimmt werden, bei der das Störsignal mit einer genügend hohen Abtastfrequenz abgetastet und digitalisiert wird. Der daraus - z.B. durch Invertieren - abgeleitete Kompensationsimpuls wird mittels eines Taktimpulsgenerators 14 ausgelesen, der mit der Treiberschaltung 11 bzw. deren Taktimpulsgenerator 110 synchronisiert sein muß und einem Digital-Analog-Wandler 15 zugeführt, dessen analoges Ausgangssignal gegebenenfalls nach weiterer Verstärkung der Eingangsklemme 12 oder der Schaltleitung 2 der Zeile $Z_{a0}$ zugeführt wird.

Fig. 6 zeigt rein schematisch ein Blockschaltbild der Schaltung 10, die die Signale der Ausleseverstärker 9 analog bzw. digital verarbeiten kann. Die Auswerteschaltung 10 enthält einen (oder mehrere) analogen Multiplexer 101, der die an seinen Eingängen anliegenden Signale nacheinander zu seinem Ausgang durchschaltet, an den ein Analog-Digital-Wandler 102 angeschlossen ist, dessen digitales Ausgangssignal einem Mikrocomputer 103 zugeführt wird. Wenn mehrere Analog-Multiplexer vorhanden sind, müssen entsprechend viele Analog-Digital-Wandler und gegebenenfalls auch Mikrocomputer vorgesehen sein.

Der Mikrocomputer liefert Bilddaten B(z, s), die von je einem optisch aktiven Matrixelement in einer Zeile z und einer Spalte s herrühren. Darüber hinaus werden auch Datenworte K(z, s) gebildet, die von den optisch inaktiven Matrixelementen in einer Zeile z und einer Spalte s herrühren und im folgenden auch als Korrekturdaten bezeichnet werden.

Fig. 7 zeigt die Daten für eine bestimmte Zeile (z.B. $z = z_2$) als Funktion der jeweiligen Matrixspalte s. Man erkennt, daß die von den optisch inaktiven Matrixelementen in den Spalten $s_{a1}$ und $s_{a2}$ gelieferten Korrekturdaten $K(z, s_{a1})$ bzw. $K(z, s_{a2})$ von Null verschieden sind - ebenso wie die Korrekturdaten $K(z, s_{b1})$ und $K(z, s_{b2})$. Da diese Daten von optisch inaktiven Matrixelementen stammen, kann es sich hierbei nur um Störungen handeln. Diese können von Störsignalen hervorgerufen werden, die über die Schaltleitung und die Gate-Drain-Kapazitäten aller Zeilen auf die Ausleseleitungen gelangt sind und während des Auslesens der betreffenden Zeile von den Ausleseverstärkern 9 verarbeitet werden. Diese Störungen sind in erster Näherung für alle in der Zeile ausgelesenen Matrixelemente gleich (zeilenkorrelierte Störungen). Dabei können sich allerdings noch Abweichungen ergeben, die jedoch eine sehr niedrige Ortsfrequenz innerhalb einer Zeile aufweisen.

Daneben gibt es noch spaltenkorrelierte Störungen, die von Leckströmen herrühren, die von einzelnen Leitungen oder Elektroden der Matrix auf die Ausleseleitung fließen. Diese Störungen sind wiederum für alle Matrixelemente einer Spalte annähernd gleich, wobei etwaige Abweichungen eine geringe Ortsfrequenz aufweisen.

Die in den Spalten $z_a$ und $z_b$ oberhalb bzw. unterhalb des optisch aktiven Bereichs der Matrix bzw. in den Zeilen beiderseits dieser Matrix befindlichen inaktiven Matrixelemente dienen dazu, die Größe dieser zeilen- bzw. spaltenkorrelierten Störungen zu ermitteln. Damit lassen sich dann die von dem optisch aktiven Teil der Matrix gelieferten Bilddaten B(z, s) korrigieren, so daß sich korrigierte Bilddaten $B_c(z, s)$ ergeben. Die Korrektur kann nach der Beziehung erfolgen

$$B_c(z, s) = B(z, s) - (K_z(z, s) + K_s(z, s)) \qquad (1).$$

Dabei stellen $K_z(z, s)$ und $K_s(z, s)$ Korrekturglieder dar, die den zeilen- bzw. spaltenkorrelierten Störungen entsprechen und die von den Korrekturdaten abgeleitet werden, die von den Matrixelementen an den beiden Seiten bzw. oben und unten abgeleitet werden.

Für $K_z(z, s)$ gilt dabei:

$$K_z(z, s) = C_1 \cdot K(z, s_a) + C_2 \cdot K(z, s_b) \qquad (2)$$

$K(z, s_a)$ ist dabei der arithmetische Mittelwert der Korrekturdaten in den Spalten $s_{a1}$ und $s_{a2}$ (vgl. Fig. 7) der Zeile z, und $K_z(z, s_b)$ ist der arithmetische Mittelwert der Korrekturdaten in den Spalten $s_{b1}$ und $s_{b2}$ der Zeile z. Die Faktoren $C_1$ und $C_2$ sind linear von der Position s in einer Zeile abhängige Interpolationsfaktoren, für die die Beziehung gilt:

$$C_1 = \frac{s - s_a}{s_b - s_a} \quad ; \quad C_2 = \frac{s_b - s}{s_b - s_a} \tag{3}$$

Dabei stellt $s_a$ bzw. $s_b$ den gewichteten Mittelwert von $s_{a1}$ und $s_{a2}$ bzw. von $s_{b1}$ und $s_{b2}$ dar.

Analog läßt sich das spaltenkorrelierte Rauschen nach der Gleichung bestimmen:

$$K_s(z, s) = C_3 \cdot K(z_a, s) + C_4 \cdot K(z_b, s) \tag{4}.$$

Dabei sind $K(z_a, s)$ und $K(z_b, s)$ die Korrekturdaten, die von den optisch inaktiven Matrixelementen in der Spalte s und in den Zeilen $z_a$ bzw. $z_b$ geliefert werden. $C_3$ und $C_4$ sind Interpolationsfaktoren, die vom Abstand der Zeile z, in der sich das Matrixelement befindet, dessen Bildwert korrigiert werden soll, von der obersten Zeile $z_a$ bzw. untersten Zeile $z_b$ abhängen. Für die gilt die Beziehung:

$$C_3 = \frac{z - z_a}{z_b - z_a} \quad ; \quad C_4 = \frac{z_b - z}{z_b - z_b} \tag{5}$$

Fig. 8 zeigt den Signalverlauf der korrigierten Bilddaten $B_c(z, s)$ für eine bestimmte Zeile z als Funktion der Spaltenzahl s.

Bei der Anordnung nach Fig. 1 sind nur zwei Zeilen ($z_a$, $z_b$) bzw. vier Spalten von optisch inaktiven Matrixelementen zur Korrektur der zeilen- bzw. spaltenkorrelierten Störungen vorgesehen. In der Praxis empfiehlt es sich, mehr Zeilen bzw. Spalten für diesen Zweck zu verwenden, beispielsweise 10 bis 100 und die Korrekturwerte daraus durch arithmetische Mittelwertbildung abzuleiten (ähnlich wie z.B. den Korrekturwert $K(z, s_a)$ im gleichen Zweig). Unterschiedliche Eigenschaften der Matrixelemente infolge von Fertigungsstreuungen haben dann geringere Auswirkungen auf die Korrektur, und das elektronische Rauschen der Korrekturdaten wird unterdrückt.

Mit den Korrekturen entsprechend den Gleichungen 1 bis 5 lassen sich nur zeilen- bzw. spaltenkorrelierte Störungen erster Ordnung korrigieren, d.h. Störungen, die linear von der Spalte bzw. Zeile abhängen. Dies ist im Regelfall ausreichend. Wenn man Störungen höherer Ordnung beseitigen will, müssen innerhalb der Zeilen $z_1 \ldots z_m$ bzw. Spalten $s_1 \ldots s_n$, d.h. innerhalb des optisch aktiven Bereichs der Matrix, Zeilen bzw. Spalten mit optisch inaktiven Matrixelementen vorgesehen sein, die zusätzliche Korrekturdaten liefern, mit deren Hilfe sich die Störungen innerhalb einer Zeile bzw. Spalte durch ein quadratisches Polynom bzw. ein Polynom noch höherer Ordnung beschreiben lassen. Da diese Matrixelemente keine Bildwerte liefern können, müssen die Bildwerte für die betreffenden Zeilen bzw. Spalten durch Interpolation aus den Bilddaten von benachbarten Zeilen bzw. Spalten bestimmt werden.

Vorstehend wurde die Erfindung anhand einer Matrix mit Fotodioden erläutert. Wie bereits erwähnt, kann man damit auch Röntgenbilder erzeugen, indem man auf die Matrix eine Schicht, z.B. aus Caesiumjodid, aufbringt, die Röntgenstrahlung in sichtbares Licht umsetzt. Die Erfindung ist aber auch bei einer Matrix anwendbar, deren Matrixelemente unmittelbar für Röntgenstrahlung empfindlich sind. Eine solche Anordnung ist in der DE-OS 40 02 429 (PHD 90-016) beschrieben, worauf ausdrücklich Bezug genommen wird. Der Begriff "optisch aktive Matrixelemente" soll daher auch Matrixelemente umfassen, die für energiereichere Strahlung jenseits des sichtbaren Bereichs empfindlich sind.

**Patentansprüche**

1. Anordnung mit in einer Matrix von in Zeilen (z) und Spalten (s) angeordneten, optisch aktiven Matrixelementen, von denen jedes einen für Licht bzw. Röntgenstrahlung empfindlichen Sensor (4) zur Erzeugung belichtungsabhängiger Signale sowie einen Schalter (1) enthält, wobei die Schalter untereinander so gekoppelt sind, daß die Schalter der Sensoren einer Zeile (z) über jeweils eine Schaltleitung (2) mittels Schaltimpulsen schaltbar sind und die Sensoren jeweils einer Spalte (s) über die Schalter (1) mit einer Ausleseleitung (3) gekoppelt sind, wobei Mittel zum Ableiten von digitalen Bilddaten B(z, s) aus den Signalen der optisch aktiven Matrixelemente auf den Ausleseleitungen vorgesehen sind, dadurch gekennzeichnet, daß Mittel (13 ... 15, 112 ... 116) zum Kombinieren der Signale auf den Ausleseleitungen (3) mit Kompensationsimpulsen vorgesehen sind, deren zeitlicher Verlauf so gestaltet ist, daß sie zumindest näherungsweise die Störimpulse kompensieren, die durch die Schaltimpulse kapazitiv in die Ausleseleitungen eingekoppelt werden.

2. Anordnung nach Anspruch 1,
dadurch gekennzeichnet, daß
- die Matrix mindestens eine Zeile ($z_{a0}$) mit Hilfsmatrixelementen enthält, die einen entsprechenden Aufbau haben wie die Matrixelemente, aber optisch inaktiv sind, daß
- die Schalter (1) der Hilfsmatrixelemente mit Sperrimpulsen beaufschlagt werden, die die entgegengesetzte Polarität, im übrigen aber einen ähnlichen zeitlichen Verlauf haben und zur gleichen Zeit auftreten wie die Schaltimpulse für die Matrixelemente, und daß
- die Hilfsmatrixelemente in der gleichen Weise mit der gleichen Ausleseleitung (3) verbunden sind wie die in der gleichen Spalte (5) befindlichen Matrixelemente.

3. Anordnung nach Anspruch 1 oder 2,
dadurch gekennzeichnet, daß außerhalb der Matrix mindestens ein Extraschalter (113) vorgesehen ist, der den gleichen Aufbau hat und in gleicher Weise geschaltet wird wie die Schalter der Matrixelemente und dessen Ausgangssignal invertiert den Signalen auf den Ausleseleitungen überlagert wird oder als Schaltsignal für die Schalter der Hilfsmatrixelemente dient.

4. Anordnung nach Anspruch 1,
dadurch gekennzeichnet, daß ein Speicher (13) vorgesehen ist, in dem der zeitliche Verlauf eines Störimpulses gespeichert ist und daß Mittel (14, 15) vorgesehen sind zum Erzeugen des Kompensationsimpulses aus dem im Speicher gespeicherten Störimpuls.

5. Anordnung nach einem der vorhergehenden Ansprüche,
dadurch gekennzeichnet, daß die Schaltimpulse eine begrenzte Flankensteilheit aufweisen.

6. Anordnung mit in einer Matrix in Zeilen (z) und Spalten (s) angeordneten, optisch aktiven Matrixelementen, von denen jedes einen für Licht bzw. Röntgenstrahlung empfindlichen Sensor (4) zur Erzeugung belichtungsabhängiger Signale sowie einen Schalter (1) enthält, wobei die Schalter untereinander so gekoppelt sind, daß die Schalter der Sensoren einer Zeile über jeweils eine Schaltleitung (2) mittels Schaltimpulsen schaltbar sind und die Sensoren jeweils einer Spalte über die Schalter mit einer Ausleseleitung (3) gekoppelt sind, wobei Mittel zum Ableiten von digitalen Bilddaten B(z, s) aus den Signalen der optisch aktiven Matrixelemente auf den Ausleseleitungen vorgesehen sind, vorzugsweise nach einem der vorhergehenden Ansprüche,
dadurch gekennzeichnet, daß die Matrix mindestens eine Zeile ($z_a$, $z_b$) (und/oder Spalte (z.B. $s_{a1}$) von weiteren Matrixelementen enthält, die den gleichen Aufbau haben wie die optisch aktiven Matrixelemente, aber optisch inaktiv sind und die mit einer weiteren Schaltleitung (Ausleseleitung) sowie mit den Ausleseleitungen (Schaltleitungen) der optisch aktiven Matrixelemente verbunden sind, die jeweils in der gleichen Spalte (Zeile) liegen und daß Korrekturmittel (103) vorgesehen sind, die von den Bilddaten B(z, s) die Korrekturdaten subtrahieren, die aus den Signalen der optisch inaktiven Matrixelemente abgeleitet werden.

7. Anordnung nach Anspruch 2 oder 6,
dadurch gekennzeichnet, daß die optisch inaktiven Matrixelemente den gleichen Aufbau haben wie die optisch aktiven Matrixelemente, aber gegen Licht bzw. Röntgenstrahleneinfall abgedeckt sind.

8. Anordnung nach Anspruch 6 oder 7,
dadurch gekennzeichnet, daß beiderseits der Matrix und/oder innerhalb der Matrix weitere Zeilen und/oder Spalten von Elementen vorgesehen sind und daß aus den dadurch erzeugten Signalen durch Interpolation Korrekturdaten ($K_z(s, z)$; $K_s(s, z)$) für die Bilddaten B(z, s) der optisch aktiven Elemente in jeweils der gleichen Spalte bzw. Zeile abgeleitet werden.

9

Fig.1

Fig.2

Fig.3a

Fig.3b

Fig.4

Fig.5

Fig.6

$K(z,s_{b1})$

$B(z,s)$

$K(z,s_{a2})$

$K(z,s_{b2})$

$K(z,s_{a1})$

s

Fig.7

$Bc(z,s)$

s

Fig.8